(19) Europäisches Patentamt
European Patent Office
Office européen des brevets

(11) Veröffentlichungsnummer: **0 061 625**
**A2**

(12) # EUROPÄISCHE PATENTANMELDUNG

(21) Anmeldenummer: **82102007.0**

(22) Anmeldetag: **12.03.82**

(51) Int. Cl.³: **C 09 B 62/085**
**D 06 P 3/66**

(30) Priorität: **21.03.81 DE 3111172**

(43) Veröffentlichungstag der Anmeldung:
**06.10.82 Patentblatt 82/40**

(84) Benannte Vertragsstaaten:
**CH DE FR GB IT LI**

(71) Anmelder: **BASF Aktiengesellschaft**
**Carl-Bosch-Strasse 38**
**D-6700 Ludwigshafen(DE)**

(72) Erfinder: **Schaffer, Ortwin, Dr.**
**Bruesseler Ring 43**
**D-6700 Ludwigshafen(DE)**

(54) **Reaktivfarbstoffe.**

(57) Die Erfindung betrifft Verbindungen, die in Form der freien Säuren der allgemeinen Formel I

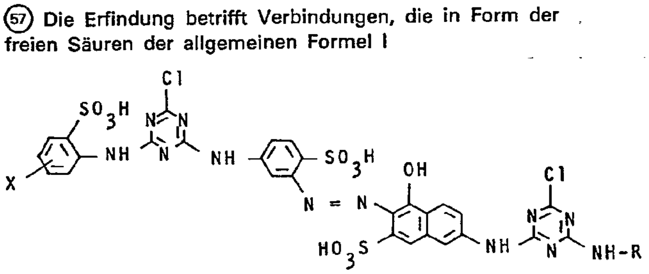

entsprechen, in der
R ein Rest der Formel

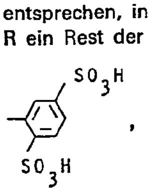 , 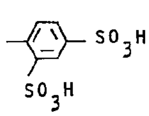 , 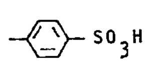 oder 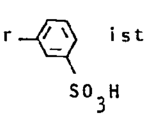 ist

und die Sulfogruppe X in 4- oder 5-Stellung steht.

Die erfindungsgemäßen Verbindungen eignen sich vorzüglich zum Färben hydroxylgruppenhaltiger Fasern, insbesondere von Baumwolle.

EP 0 061 625 A2

Reaktivfarbstoffe

Die Erfindung betrifft Verbindungen, die in Form der freien Säuren der allgemeinen Formel I

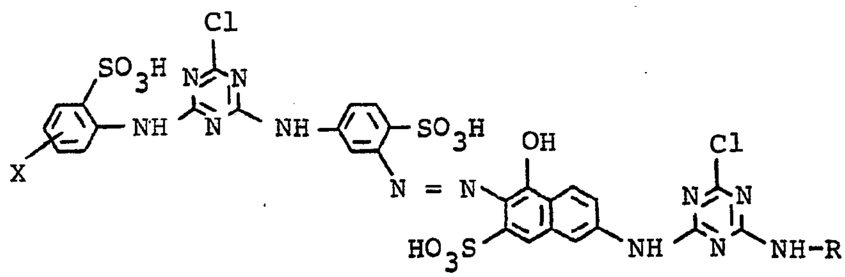

entsprechen, in der

R ein Rest der Formel

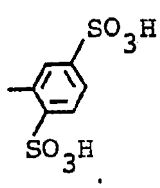 , 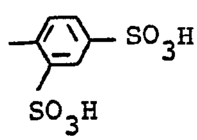 , 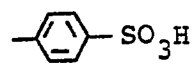 oder 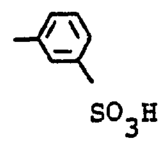 ist

und die Sulfogruppe X in 4- oder 5-Stellung steht. Bevorzugt ist für X die 5-Stellung und für R 3-Sulfophenyl oder 2,5-Disulfonyl.

Die neuen Farbstoffe sind orange und eignen sich vorzüglich für die verschiedenen Reaktivfärbeverfahren. Man erhält Färbungen auf hydroxylgruppenhaltigen Fasern, insbesondere Baumwolle, die sich durch hohe Brillanz, Farbstärke, Licht- und Naßechtheiten auszeichnen.

Bg/P

In den folgenden Beispielen beziehen sich Angaben über Teile und Prozente, sofern nicht anders vermerkt, auf das Gewicht.

Beispiel 1

Zu einer Lösung von 47,5 Teilen 2-Amino-5-hydroxy-naphthalin-7-sulfonsäure in 400 Teilen Wasser werden 37,6 Teile fein suspendiertes Cyanurchlorid gegeben. Bei 0 °C wird im Verlauf von 2 - 3 Stunden der pH-Wert der Kondensation mit 10,8 Teilen Natriumcarbonat bei 5 gehalten. Anschließend fügt man eine neutrale Lösung von 34,6 Teilen Anilin-3-sulfonsäure zu und kondensiert bei 30 - 40 °C und einem pH-Wert von 5 durch Zugabe von 14,5 Teilen Natriumhydrogencarbonat.

Die wäßrige Lösung des primären Kondensationsproduktes aus 50,6 Teilen Anilin-2,5-disulfosäure und 37,6 Teilen Cyanurchlorid wird mit einer neutralen Lösung von 36,7 Teilen 1,3-Phenylendiamin-4-sulfonsäure versetzt. Durch Zugabe von 16,8 Teilen Natriumbicarbonat wird bei 30 - 40 °C und einem pH-Wert von 5 kondensiert, anschließend salzsauer diazotiert.

Man vereinigt die beiden Lösungen und kuppelt bei 0 - 5 °C und einem pH-Wert von 6 - 6,5 durch Zugabe von insgesamt 33,6 Teilen Natriumbicarbonat. Der Farbstoff wird aus neutraler Lösung durch Zufügen von Siedesalz gefällt und getrocknet. Er färbt Baumwolle in brillanten orangen Tönen mit guter Licht- und Naßechtheit.

Beispiel 2

Zur wäßrigen Lösung des primären Kondensationsproduktes aus 50,6 Teilen Anilin-2,5-disulfonsäure und 37,6 Teilen Cyanurchlorid werden 400 Teile einer neutralen wäßrigen Lösung von 46,8 Teilen 2-Amino-5-hydroxy-naphthalin-7-sulfonsäure gegeben und bei 40 °C und pH 5 durch Zufügen von 14,3 Teilen Natriumbicarbonat kondensiert.

Die salzsauer diazotierte Lösung des sekundären Kondensationsproduktes aus 50,6 Teilen Anilin-2,5-disulfonsäure, 37,6 Teilen Cyanurchlorid und 36,7 Teilen 1,3-Phenylendiamin-4-sulfonsäure wird mit obiger Lösung vereinigt und bei 0 - 5 °C und einem pH-Wert von 6 - 6,5 durch Zugabe von insgesamt 33,6 Teilen Natriumbicarbonat gekuppelt. Der Farbstoff wird aus neutraler Lösung durch Zufügen von Kaliumchlorid ausgefällt und getrocknet. Er färbt Baumwolle in brillanten Orangetönen mit guter Licht- und Naßechtheit.

Weitere Farbstoffe mit ähnlichen Eigenschaften, die nach den in Beispiel 1 oder 2 beschriebenen Verfahren hergestellt werden können, sind in Tabelle 1 zusammengefaßt.

Tabelle 1

| Bsp. | X | R | Farbton |
|---|---|---|---|
| 3 | 4-sulfo | 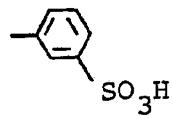 | orange |
| 4 | 4-sulfo | 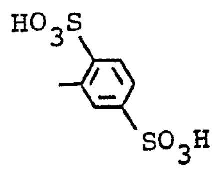 | orange |
| 5 | 4-sulfo | 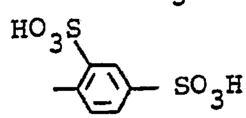 | orange |
| 6 | 5-sulfo | 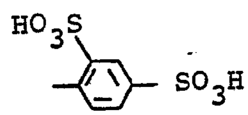 | orange |
| 7 | 4-sulfo | 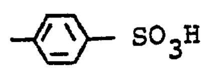 | orange |
| 8 | 5-sulfo | 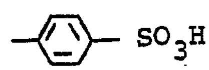 | orange |

Patentansprüche

1. Reaktivfarbstoffe, die in Form der freien Säuren der allgemeinen Formel I

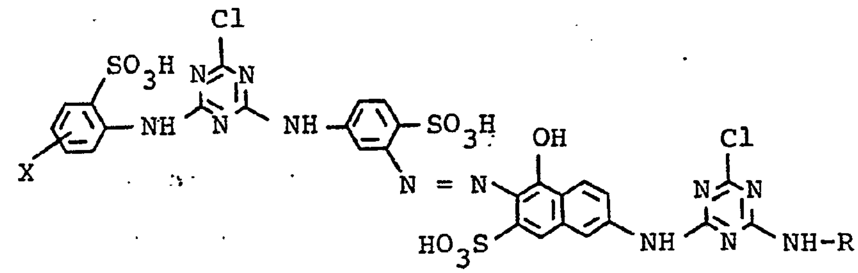

entsprechen, in der
R ein Rest der Formel

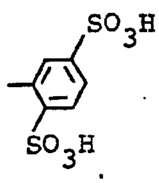 , 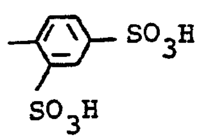 , 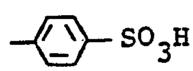 oder 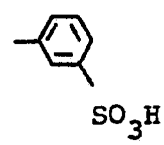 ist

und die Sulfogruppe X in 4- oder 5-Stellung steht.

2. Verwendung der Verbindungen gemäß Anspruch 1 zum Färben hydroxylgruppenhaltiger Fasern.